# EUROPÄISCHE PATENTANMELDUNG

(11) **EP 0 729 866 A1**
(43) Veröffentlichungstag der Anmeldung: **04.09.1996**
(21) Anmeldenummer: 96100634.3
(22) Anmeldetag: 18.01.1996
(51) Int. Cl.: B60R 16/02, G08C 17/04

(54) **Elektronische Einrichtung**

(30) Priorität: 28.02.1995 DE 19506937
(71) Anmelder: ROBERT BOSCH GMBH, 70442 Stuttgart (DE)
(72) Erfinder: Zabler, Erich, Dr. Dipl.-Ing., D-76297 Stutensee (DE); Dukart, Anton, Dipl.-Ing., D-76744 Woerth (DE)

(57) **Zusammenfassung**

Eine elektronische Einrichtung umfaßt einen Drehtransformator (2) mit einer Primärwicklung (2a) und einer Sekundärwicklung (2b). Primärseitig ist ein Schaltelement (3) angeordnet. Sekundärseitig ist ein zweites Schaltelement (4) in Serie zu einer Wechselspannungsquelle (5) angeordnet. Die Betätigung des primärseitig angeordneten Schaltelements (3) führt zur Aktivierung des sekundärseitig angeordneten Schaltelements (4), das seinerseits vermittels eines weiteren Schaltelements (6) einen dritten Stromkreis schließt.

## Beschreibung

### Stand der Technik

Die Erfindung betrifft eine elektronische Einrichtung nach dem Oberbegriff des Anspruchs 1. Zum Zwecke der berührungslosen Zündimpuls-Übertragung für Airbags ist aus DE 24 33 555 A1 ein Drehtransformator mit einer drehfest angeordneten und mit der Lenksäule eines Fahrzeugs verbundenen Primärspule und mit einer drehbar mit dem Lenkrad verbundenen Sekundärspule bekannt. In einem die Primärspule des Drehtransformators einschließenden Stromkreis sind eine Batterie, ein Schalter und eine Sicherung in Serie geschaltet. In einem die Sekundärspule des Drehtransformators umfassenden Stromkreis ist die Zündpille eines Airbags angeordnet. Durch Betätigung des primärseitig angeordneten Schalters wird in dem Sekundärkreis ein Spannungsimpuls induziert, der die Zündpille des Airbags aktiviert.

### Vorteile der Erfindung

Ausgehend von einem an sich bekannten Drehtransformator ermöglicht die erfindungsgemäße Lösung gemäß den Merkmalen des Anspruchs 1 einerseits eine besonders betriebssichere Betätigung eines sekundärseitig angeordneten elektromagnetischen Verbrauchers. Andererseits ermöglicht die Erfindung eine besonders einfache mechanische Konstruktion eines Fahrzeuglenkrads. Dies wird insbesondere dadurch bewirkt, daß lediglich ein vorzugsweise mechanisch betätigbares Schaltelement und die Primärwicklung eines Drehtransformators mit dem Lenkrad selbst verbunden und drehbar mit diesem gelagert sind. Der durch Betätigung des primärseitig angeordneten Schaltelements aktivierbare elektromagnetische Verbraucher ist dagegen drehfest und sekundärseitig angeordnet. Vorzugsweise wird der elektromagnetische Verbraucher mittelbar von einem elektromagnetisch betätigbaren Schaltelement aktiviert, das sekundärseitig in einem die Sekundärwicklung des Drehtransformators umfassenden Stromkreis in Serie mit einer Wechselspannungsquelle angeordnet ist.

Die erfindungsgemäße Ausgestaltung der elektronischen Einrichtung ermöglicht eine besonders einfache Montage und Demontage des Lenkrads, wobei die elektromagnetische Kopplung zwischen primär angeordnetem Schaltelement und sekundär angeordnetem elektromagnetischen Verbraucher ohne aufwendige Justierung der Bauteile und insbesondere ohne Herstellung irgendwelcher galvanischer Verbindungen ermöglicht wird. Darüber hinaus zeichnet sich die elektronische Einrichtung durch lange Lebensdauer und hohe Betriebssicherheit aus, da im wesentlich nur verschleißfreie Mittel zur Signalübertragung eingesetzt sind.

### Zeichnung

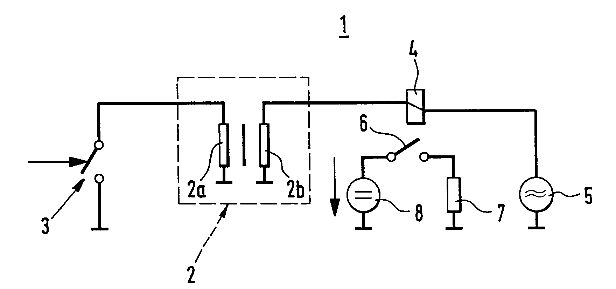

Ein Ausführungsbeispiel der Erfindung ist in der Zeichnung dargestellt und in der nachfolgenden Beschreibung näher erläutert. Die Figur zeigt ein schematisches Blockschaltbild der elektronischen Einrichtung.

### Beschreibung des Ausführungsbeispiels

Die Figur zeigt ein schematisches Blockschaltbild der elektronischen Einrichtung 1, die einen eine Primärwicklung 2a und eine Sekundärwicklung 2b umfassenden Drehtransformator 2 aufweist. Die Primärwicklung 2a des Drehtransformators 2 ist mit einem nicht dargestellten Lenkrad eines Fahrzeugs verbunden und demzufolge drehbar gelagert. Die Primärwicklung 2a ist weiterhin Bestandteil eines primärseitigen Stromkreises, in dem weiterhin ein vorzugsweise mechanisch betätigbares Schaltelement 3 angeordnet ist. Die Sekundärwicklung 2b des Drehtransformators 2 ist demgegenüber drehfest gelagert und beispielsweise mit der Lenksäule des Fahrzeugs verbunden. Die Sekundärwicklung 2b ist Bestandteil eines sekundärseitigen Stromkreises, in dem ein zweites Schaltelement 4 und eine Wechselspannungsquelle 5 in Serie geschaltet sind. Bei dem zweiten Schaltelement 4 handelt es sich vorzugsweise um ein elektromechanisch betätigbares Schaltelement, vorzugsweise ein elektromagnetisches Relais, das über mindestens einen Arbeitskontakt verfügt. Bei diesem Arbeitskontakt handelt es sich um ein Schaltmittel 6, das wiederum Bestandteil eines weiteren Stromkreises ist, in dem der elektromagnetische Verbraucher 7 und eine Gleichspannungsquelle 8 angeordnet sind. Bei der Gleichspannungsquelle 8 handelt es sich vorzugsweise um die Fahrzeugbatterie des Fahrzeugs. Bei dem elektromagnetischen Verbraucher 7 handelt es sich vorzugsweise um eine Signaleinrichtung, insbesondere die Hupe des Fahrzeugs.

Bei Betätigung des primärseitig angeordneten Schaltelements 3 wird im wesentlichen die Primärwicklung 2a des Drehtransformators 2 kurzgeschlossen. Das elektromagnetische Relais 4 wird erregt und betätigt das Schaltelement 6, das den dritten Stromkreis schließt und demzufolge zu einer Aktivierung des elektromagnetischen Verbrauchers 7 führt. Durch geeignete konstruktive Ausbildung des Drehtransformators 2 derart, daß einerseits die Primärwicklung 2a drehbar mit dem Lenkrad des Fahrzeugs verbunden und andererseits die Sekundärwicklung 2b drehfest mit der Lenksäule des Fahrzeugs verbunden sind, wird eine besonders einfache Demontage und Montage des Lenkrads ermöglicht. Nach Montage des Lenkrads erfolgt über die Wicklungen 2a und 2b des Drehtransformators 2 eine elektromagnetische Kopplung der primär und sekundär angeordneten Stromkreise, ohne daß es der Herstellung einer galvanischen Verbindung bedürfte. Da keine galvanische Verbindung etwa in Form von Schleifringen oder Drehfedern vorgesehen ist, ist die elektronische Einrichtung besonders betriebssicher und alterungsbeständig, da nahezu kein Verschleiß von Bauelementen zu befürchten ist.

## Patentansprüche

1. Elektronische Einrichtung mit einem mindestens je eine Primär- und eine Sekundärwicklung aufweisenden Drehtransformator, bei der in einem die Primärwicklung umfassenden Stromkreis ein insbesondere mechanisch betätigbares Schaltelement angeordnet ist, dadurch gekennzeichnet, daß in einem die Sekundärwicklung (2b) des Drehtransformators (2) umfassenden Stromkreis (2b, 4, 5) ein zweites Schaltelement (4) und eine Wechselspannungsquelle (5) angeordnet sind.

2. Elektronische Einrichtung nach Anspruch 1, dadurch gekennzeichnet, daß das zweite Schaltelement (4) ein elektromagnetisches Relais ist.

3. Elektronische Einrichtung nach einen der Ansprüche 1, 2, dadurch gekennzeichnet, daß das elektromagnetische Relais (4) mindestens einen Arbeitskontakt (Schaltelement 6) aufweist.

4. Elektronische Einrichtung nach einen der Ansprüche 1 bis 3, dadurch gekennzeichnet, daß das Schaltelement (6) Bestandteil eines weiteren, sekundärseitig angeordneten Stromkreises ist, der einen elektromagnetischen Verbraucher (7) und eine Gleichspannungsquelle (8) umfaßt.
